# FASCICULE DE BREVET EUROPEEN

(11) **EP 0 874 229 B1**
(45) Date de publication et mention de la délivrance du brevet: **21.01.2004**
(21) Numéro de dépôt: 98400920.9
(22) Date de dépôt: 14.04.1998
(51) Int. Cl.: G01J 3/46, G01J 3/52

(54) **Transformation colorimétrique pour dispositif de restitution de couleurs**
Kolorimetrische Transformation für Farbwiederherstellungsapparat
Colorimetric transformation for colour-restoring device

(30) Priorité: 25.04.1997 FR 9705331
(43) Date de publication de la demande: 28.10.1998
(73) Titulaire: FRANCE TELECOM SA, 75015 Paris (FR)
(72) Inventeur: Schmitt, Francis, 75013 Paris (FR); Hardeberg, Jon Yngue, 75015 Paris (FR)
(74) Mandataire: Cabinet Martinet & Lapoux

(56) Documents cités:
- EP-A- 0 501 942
- WO-A-93/13398
- US-A- 5 087 126
- US-A- 5 296 923

## Description

La présente invention concerne de manière générale un procédé de gestion des couleurs pour un dispositif de restitution de couleurs, tel qu'une imprimante couleur, par exemple une imprimante d'un télécopieur couleur.

Plus particulièrement, la présente invention concerne la transformation d'une couleur reçue par le dispositif de restitution de couleurs et définie dans un premier espace de couleur indépendant de celui-ci, en une couleur restituable par le dispositif de restitution de couleurs et définie dans un second espace de couleur propre à celui-ci.

Lorsqu'une image numérique en couleur produite par un premier télécopieur couleur est transmise à l'imprimante d'un second télécopieur couleur relié au premier télécopieur à travers un réseau de télécommunications, des pixels de l'image numérique peuvent avoir une couleur qui n'appartient pas à l'ensemble des couleurs restituables par l'imprimante. L'ensemble des couleurs restituables par l'imprimante est défini géométriquement dans un espace de couleur donné par un volume appelé "solide des couleurs".

Des techniques connues de compression et d'écrêtage transforment toute couleur reçue par l'imprimante en une couleur comprise dans son solide des couleurs. Ces techniques consistent par exemple à appliquer une homothétie à chaque couleur reçue de manière à la rapprocher d'un point central du solide des couleurs, ou à projeter à la surface du solide des couleurs toute couleur située hors de celui-ci. Pour mettre en oeuvre ces techniques, il est parfois nécessaire de localiser préalablement la couleur reçue dans l'espace de couleur, afin notamment de déterminer si celle-ci appartient ou non au solide des couleurs. Dans les espaces de couleur psychométriques, tels que l'espace CIE L*a*b*, le solide des couleurs présente parfois une forme très irrégulière avec des faces concaves. La localisation de la couleur reçue par rapport au solide des couleurs est alors très complexe à réaliser. La technique antérieure ne fournit pas de procédé pour localiser aisément des couleurs situées à l'extérieur du solide des couleurs.

L'article de Jon Yngve HARDEBERG, Francis SCHMITT et al., intitulé "Color Management for Color Facsimile" publié dans les PROCEEDINGS IS&T/SID, "The Fourth Color Imaging Conference : Color Science, Systems and Applications", Scottsdale, Arizona, novembre 1996, pages 108 à 113, présente un procédé de gestion des couleurs pour une imprimante, selon lequel le solide des couleurs de l'imprimante est échantillonné dans un espace de couleur CMJ défini par trois couleurs primaires Cyan, Magenta, et Jaune restituables par l'imprimante. Le solide des couleurs échantillonné est ensuite triangulé dans l'espace CMJ, c'est-à-dire le solide des couleurs est subdivisé en tétraèdres adjacents, puis est transféré dans l'espace de couleur CIE L*a*b*. La subdivision en tétraèdres du solide des couleurs permet de déterminer pour toute couleur initialement définie dans l'espace CIE L*a*b* et incluse dans le solide des couleurs, ses coordonnées dans l'espace CMJ propre à l'imprimante.

L'article précité évoque en outre la construction d'une structure externe au solide des couleurs dans l'espace de couleur CIE L*a*b*, pour traiter tout point de l'espace de couleur situé en dehors du solide des couleurs. Aucune construction pratique de structure externe n'est toutefois proposée, et aucune méthode précise pour transformer une couleur n'appartenant pas au solide des couleurs en une couleur restituable par l'imprimante n'est décrite dans cet article.

La présente invention vise à remédier aux inconvénients précités en fournissant un procédé de gestion des couleurs efficace et rapide, qui soit applicable à tout type de dispositif de restitution de couleurs, et qui permette de traiter n'importe quelle couleur extérieure au solide des couleurs.

A cette fin, un procédé de transformation d'une couleur prédéterminée correspondant à un point donné dans un premier espace de couleur, en une couleur restituable par un dispositif de restitution de couleurs et définie dans un second espace de couleur,
comprenant les étapes :
- détermination d'un ensemble de premiers polyèdres convexes constituant sensiblement une partition d'un solide des couleurs du dispositif de restitution de couleurs dans le second espace de couleur, et
- transformation de l'ensemble de premiers polyèdres convexes en un ensemble de premiers polyèdres convexes transformés définis dans le premier espace de couleur, de sorte que l'ensemble des premiers polyèdres convexes transformés constitue sensiblement une partition du solide des couleurs du dispositif de restitution de couleurs dans le premier espace de couleurs,
est caractérisé en ce qu'il comprend en outre les étapes suivantes :
- détermination dans le premier espace de couleur, d'un ensemble de seconds polyèdres convexes externes au solide des couleurs, de sorte que les premiers polyèdres convexes transformés et les seconds polyèdres convexes constituent une partition d'un volume incluant le solide des couleurs et ledit point donné,
- localisation du polyèdre convexe contenant ledit point donné dans le premier espace de couleur, et
- si le polyèdre convexe localisé contenant ledit point donné appartient à l'ensemble de seconds polyèdres externes au solide des couleurs, transformation dans le premier espace de couleur dudit point donné en un point transformé appartenant au solide des couleurs, et interpolation des coordonnées du point transformé dans le second espace de couleur en fonction au moins des coordonnées dans cet espace des sommets d'un polyèdre convexe appartenant à l'ensemble des premiers polyèdres convexes transformés et contenant le point transformé.

Les coordonnées interpolées du point transformé définissent ladite couleur restituable par le dispositif de restitution de couleurs dans le second espace de couleur, qui est un espace propre au dispositif.

L'ensemble de seconds polyèdres convexes constitue une structure externe au solide des couleurs qui est complémentaire de l'ensemble de premiers polyèdres convexes transformés interne au solide des couleurs. Ainsi, le point donné du premier espace de couleur est facilement repéré par localisation du polyèdre convexe le contenant. La localisation du polyèdre convexe peut être effectuée de manière classique au moyen par exemple d'une technique de cheminement de proche en proche, c'est-à-dire de polyèdre en polyèdre. A chaque polyèdre sont alors associées des informations d'identification du polyèdre et des informations d'identification de ses polyèdres adjacents. En outre, chaque polyèdre convexe est identifié comme un premier polyèdre, inclus dans le solide des couleurs, ou un second polyèdre, situé à l'extérieur du solide des couleurs. La localisation du point donné par rapport au solide des couleurs, pour déterminer si le point donné appartient ou non à celui-ci, est directement déduite de la localisation du polyèdre contenant ledit point donné.

De préférence, les premiers polyèdres convexes transformés et les seconds polyèdres convexes sont des tétraèdres, de manière à rendre la subdivision du volume incluant le solide des couleurs la plus fine possible.

Le procédé conforme à l'invention peut traiter également tout point du premier espace de couleur situé à l'intérieur ou à la surface du solide des couleurs. A cet effet, il est prévu une étape d'interpolation des coordonnées du point donné dans le second espace de couleur en fonction au moins des coordonnées dans cet espace des sommets du polyèdre localisé contenant le point donné, si ce polyèdre appartient à l'ensemble de premiers polyèdres transformés.

Typiquement ladite détermination d'un ensemble de premiers polyèdres convexes dans le second espace de couleur comprend les étapes suivantes :
- restitution par le dispositif de restitution de couleurs d'une mire de couleur comprenant un ensemble d'échantillons de couleur représentatif du solide des couleurs, les échantillons de couleurs correspondant respectivement à des points prédéterminés dans le second espace de couleur,
- analyse de la mire de couleur restituée afin de déterminer les coordonnées de chaque point prédéterminé dans le premier espace de couleur, et
- triangulation desdits points prédéterminés dans le second espace de couleur.

L'étape de transformation de l'ensemble de premiers polyèdres convexes dans le premier espace de couleur consiste à transformer chaque premier polyèdre convexe en un premier polyèdre convexe transformé correspondant en transférant les sommets dudit chaque premier polyèdre convexe dans le premier espace de couleur. Ainsi, les premiers polyèdres convexes restent des polyèdres, avec des faces planes, après leur transformation, même lorsque la transformation entre les second et premier espaces de couleurs est non-linéaire.

Le solide des couleurs est typiquement délimité par des faces dans les premier et second espaces de couleur. Généralement, dans le premier espace de couleur, les faces sont non planes. De préférence, le volume incluant le solide des couleurs dans le premier espace est alors le volume d'un polyèdre convexe défini par des sommets prédéterminés, et pour chacune des faces du solide des couleurs il existe au-moins un sommet parmi lesdits sommets prédéterminés qui soit en visibilité directe de toute la surface extérieure de la face, et chaque sommet des seconds polyèdres convexes externes au solide des couleurs: dans le premier espace de couleur est confondu avec l'un desdits sommets prédéterminés ou avec l'un des sommets des premiers polyèdres convexes transformés situé sur la surface du solide des couleurs. De cette manière, l'ensemble de seconds polyèdres convexes est adapté à la forme du solide des couleurs dans le premier espace de couleur, qui peut être assez irrégulière. Ainsi, lorsque le solide des couleurs est sensiblement un cube dans le second espace de couleur propre au dispositif, le polyèdre convexe défini par les sommets prédéterminés peut être un octaèdre dont les sommets sont respectivement en regard des faces non nécessairement planes du solide des couleurs dans le premier espace de couleur.

Selon une réalisation pratique de l'invention, ladite détermination d'un ensemble de seconds polyèdres convexes comprend les étapes :
- détermination, dans le second espace de couleur, de premiers points additionnels externes au solide des couleurs et définissant un polyèdre convexe qui inclut le solide des couleurs, chaque premier point additionnel étant en visibilité directe de toute la surface extérieure de l'une respective des faces du solide des couleurs dans cet espace,
- détermination, dans le second espace de couleur, d'un ensemble de polyèdres convexes externes au solide des couleurs, de sorte que les premiers polyèdres convexes et lesdits polyèdres convexes externes au solide des couleurs constituent sensiblement une partition du polyèdre convexe défini par les premiers points additionnels, et de sorte que chaque sommet desdits polyèdres convexes externes au solide des couleurs soit confondu avec l'un des premiers points additionnels ou avec l'un des sommets des premiers tétraèdres situé sur la surface du solide des couleurs,
- détermination, dans le premier espace de couleur, de seconds points additionnels, chaque second point additionnel étant en visibilité directe de toute la surface extérieure de l'une respective des faces du solide des couleurs dans cet espace, et
- transformation desdits polyèdres convexes externes au solide des couleurs en les seconds polyèdres convexes par transfert dans le premier espace de couleur de chaque sommet desdits polyèdres convexes externes au solide des couleurs qui est confondu avec l'un des sommets des premiers tétraèdres, et par remplacement de chaque sommet desdits polyèdres convexes externes au solide des couleurs qui est confondu avec l'un des premiers points additionnels par l'un correspondant des seconds points additionnels.

Typiquement, le premier espace de couleur a un domaine de définition borné incluant le solide des couleurs du dispositif de restitution de couleurs, et ledit volume incluant le solide des couleurs inclut tout le domaine de définition.

Selon une variante de l'invention, le domaine de définition du premier espace de couleur est échantillonné en des points d'échantillonnage donnés. L'étape de localisation du polyèdre convexe, l'étape de transformation, l'étape d'interpolation des coordonnées du point transformé, et l'étape d'interpolation des coordonnées dudit point donné sont mises en oeuvre pour chaque point d'échantillonnage de manière à établir une table de transcodage contenant des coordonnées associées aux points d'échantillonnage dans le second espace de couleur.

La table de transcodage caractérise le dispositif de restitution de couleurs, et permet de déterminer rapidement les coordonnées dans le second espace de couleur propre au dispositif de n'importe quel point initialement défini dans le premier espace de couleur, par interpolation desdites coordonnées en fonction de coordonnées mémorisées dans la table de transcodage.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme d'une partie de réception d'un télécopieur couleur relié à un réseau de télécommunications et dans lequel est mis en oeuvre le procédé conforme à l'invention ;
- la figure 2 est un algorithme de caractérisation d'une imprimante du télécopieur couleur de la figure 1 ;
- la figure 3 est un diagramme d'un solide des couleurs échantillonné de l'imprimante du télécopieur de la figure 1 dans un espace de couleur à trois dimensions propre à l'imprimante ;
- la figure 4 est un diagramme d'un ensemble de premiers tétraèdres subdivisant le solide des couleurs de l'imprimante du télécopieur de la figure 1 dans l'espace de couleur propre à l'imprimante ;
- la figure 5 est un diagramme de l'ensemble de tétraèdres de la figure 4 transféré dans un espace de couleur à trois dimensions indépendant de l'imprimante du télécopieur de la figure 1 ;
- les figures 6A et 6B montrent deux tétraèdres adjacents respectivement dans l'espace de couleur propre à l'imprimante du télécopieur de la figure 1 et dans l'espace de couleur indépendant de l'imprimante ;
- la figure 7 est un diagramme de points additionnels extérieurs au solide des couleurs de l'imprimante du télécopieur de la figure 1 dans l'espace de couleur propre à l'imprimante ;
- les figures 8A, 8B et 8C sont des diagrammes montrant respectivement des sous-ensembles de seconds tétraèdres extérieurs au solide des couleurs de l'imprimante du télécopieur de la figure 1 dans l'espace de couleur propre à l'imprimante ;
- les figures 9A et 9B sont des diagrammes respectivement d'une sphère de Gauss unitaire et d'un cube utilisé pour subdiviser la surface de la sphère de Gauss en calottes sphériques ;
- les figures 10A et 10B sont des diagrammes schématiques à deux dimensions montrant la construction de points additionnels extérieurs au solide des couleurs de l'imprimante du télécopieur de la figure 1 dans l'espace de couleur indépendant de l'imprimante ;
- la figure 11 est un diagramme d'un octaèdre englobant le solide des couleurs de l'imprimante du télécopieur de la figure 1 et le domaine de définition de l'espace de couleur indépendant de l'imprimante ;
- la figure 12 est un algorithme de transformation de couleur mis en oeuvre par un microprocesseur dans le télécopieur de la figure 1 ;
   et
- la figure 13 illustre des techniques d'écrêtage pour transformer des couleurs dans le télécopieur de la figure 1.

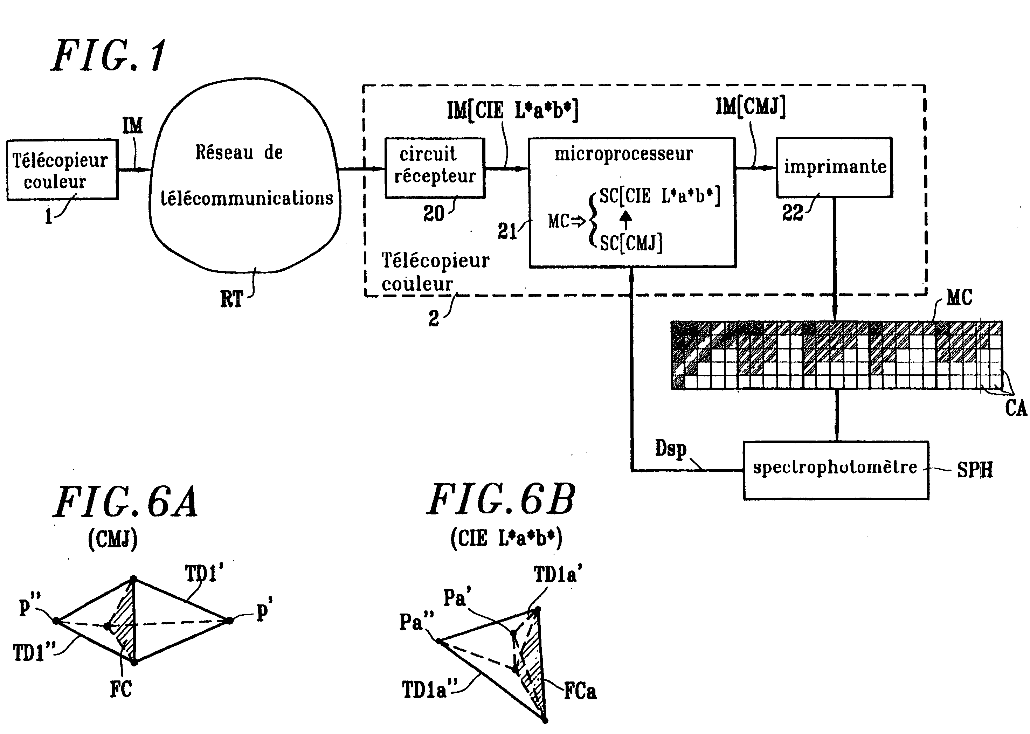

En référence à la figure 1, un premier télécopieur couleur 1 et un second télécopieur couleur 2 sont reliés à travers un réseau de télécommunications RT. Le premier télécopieur 1 produit un signal représentatif d'une image numérique en couleurs IM à transmettre au second télécopieur 2. La couleur de chaque pixel de l'image numérique IM est définie par des coordonnées dans un premier espace de couleur, dit également espace colorimétrique. Le premier espace de couleur est par exemple l'espace chromatique CIE L*a*b* recommandé par la Commission Internationale de l'Eclairage (CIE). L'espace CIE L*a*b* est un espace psychométrique dans lequel des points équi-espacés produisent des différences de couleur perçues visuellement comme sensiblement égales. L'espace CIE L*a*b* comprend un axe de clarté L*, et deux axes chromatiques a* et b*. Sur l'axe de clarté L* sont portées des valeurs comprises entre 0 à 100 et associées à des niveaux de gris, la valeur 0 correspondant au noir et la valeur 100 au blanc. Les coordonnées d'une couleur quelconque de l'espace de couleur CIE L*a*b* se déduisent de ses composantes trichromatiques dans l'espace de couleur CIE XYZ par des relations non-linéaires connues.

Dans le second télécopieur 2, dont seulement une partie de réception a été représentée à la figure 1, un circuit récepteur 20 fournit à un microprocesseur 21 les coordonnées dans le premier espace de couleur de la couleur de chaque pixel de l'image IM recue. Le microprocesseur 21 transforme lesdites coordonnées dans le premier espace de couleur en des coordonnées dans un second espace de couleur propre à une imprimante 22 du télécopieur 2. Les coordonnées dans le second espace de couleur correspondent à une couleur restituable par l'imprimante 22. Le second espace de couleur est typiquement un espace CMJ dans lequel les coordonnées de chaque point définissent des proportions respectives d'encres primaires de couleurs Cyan, Magenta et Jaune aptes à être imprimées par l'imprimante 22.

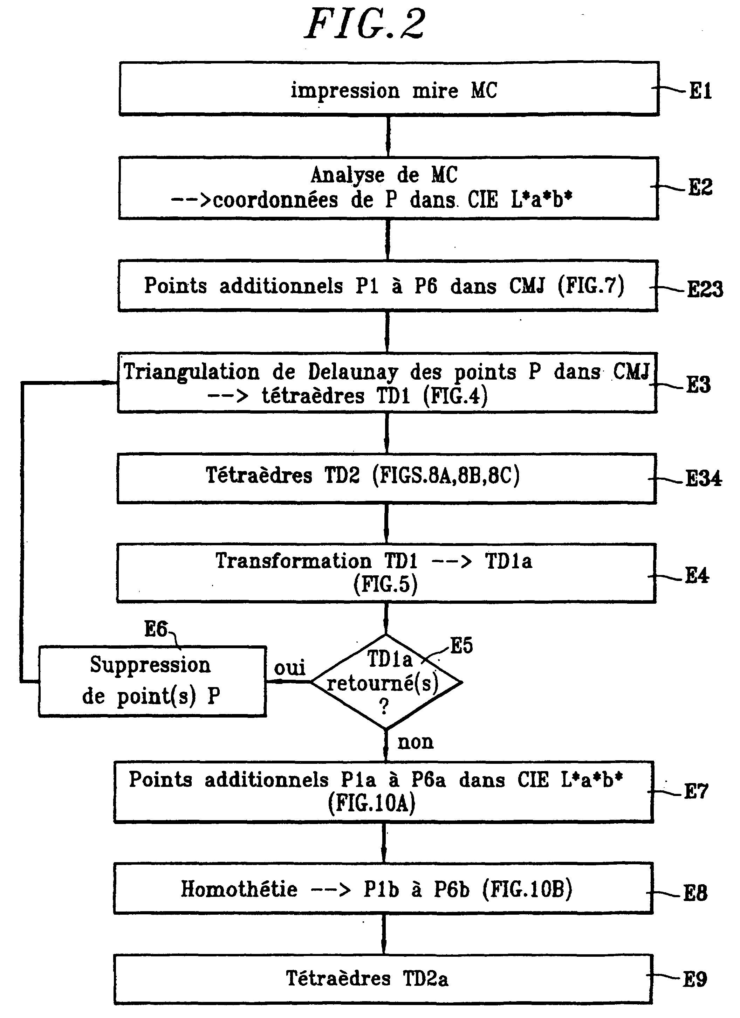

La figure 2 montre un algorithme de caractérisation de l'imprimante 22 du second télécopieur couleur 2, mis en oeuvre sporadiquement lorsque le télécopieur 2 n'est pas en ligne.

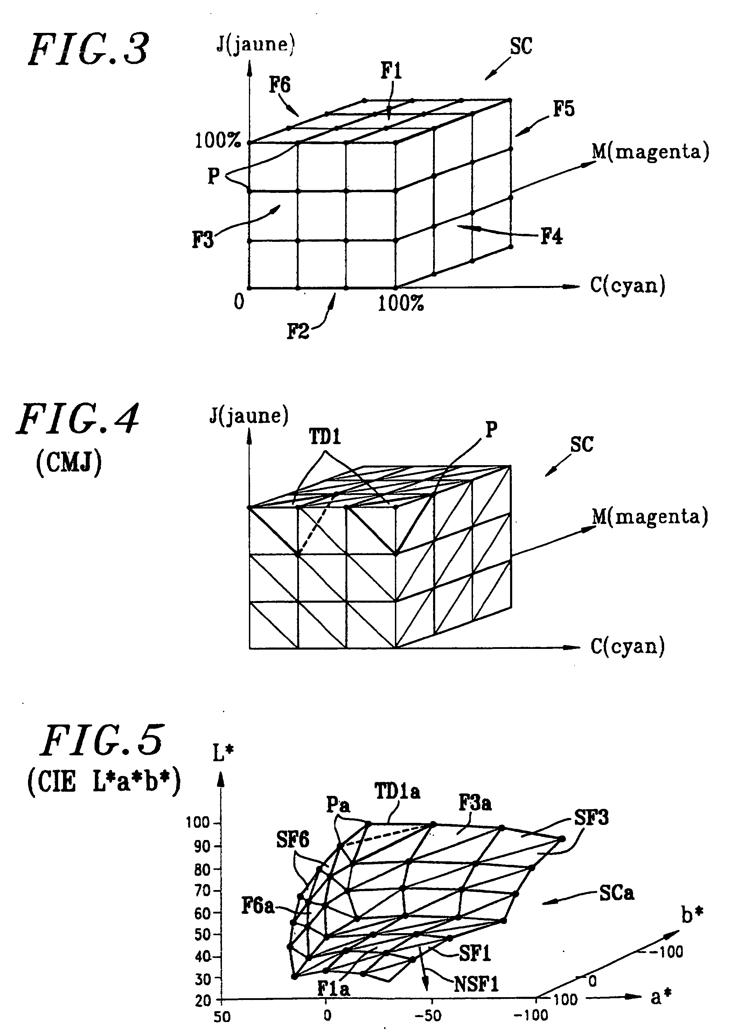

A une étape E1, le microprocesseur 21 applique un signal représentatif d'une mire de couleur numérique MC à l'imprimante 22, après que le microprocesseur a sélectionné des proportions, comprises entre 0 % et 100 %, d'encres de couleurs cyan, magenta et jaune restituables par l'imprimante. La mire de couleur MC, montrée à la figure 1 après impression par l'imprimante 22, comprend un nombre entier N d'échantillons de couleur, sous la forme de plages homogènes CA ayant chacune une couleur uniforme prédéterminée. Les échantillons de couleur CA de la mire MC sont représentatifs de l'ensemble des couleurs restituables par l'imprimante. L'ensemble des couleurs restituables par l'imprimante définit, dans l'espace de couleur CMJ, un volume appelé "solide des couleurs", désigné par SC et montré à la figure 3. Le solide des couleurs SC est typiquement un cube dont trois arêtes sont respectivement colinéaires à des axes de couleurs cyan, magenta et jaune d'un repère orthonormé de l'espace CMJ. Les six faces du cube sont respectivement désignées par F1 à F6.

Chaque échantillon de couleur CA de la mire MC correspond à un point d'échantillonnage respectif P qui est localisé à l'intérieur ou sur la surface du solide des couleurs SC. La répartition des points P n'est pas nécessairement régulière, les échantillons de couleur pouvant être plus denses dans les zones du solide des couleurs SC où l'oeil humain est plus sensible. Typiquement, l'entier N est égal à 6*6*6=216.

A une étape E2, la mire de couleur MC imprimée par l'imprimante 22 est analysée par un appareil de mesure tel qu'un spectrophotomètre SPH. Le spectrophotomètre SPH fournit des données spectrales Dsp au microprocesseur 21 afin que ce dernier détermine les coordonnées des points d'échantillonnage P dans l'espace CIE L*a*b*. En variante, la mire de couleur MC peut être analysée au moyen d'un colorimètre ou d'un scanner calibré (non représentés).

A une étape E3, le microprocesseur 21 applique de manière classique une triangulation à trois dimensions aux points d'échantillonnage P dans l'espace de couleur CMJ. La triangulation est de préférence une triangulation de Delaunay, et consiste, comme montré à la figure 4, à relier géométriquement entre eux les points d'échantillonnage P de façon à former des polyèdres convexes, et plus particulièrement des premiers tétraèdres TD1. Chaque point d'échantillonnage P est un sommet de tétraèdre TD1. L'ensemble des premiers tétraèdres (pyramides triangulaires) TD1 constitue une partition de l'enveloppe convexe des points P, c'est-à-dire sensiblement du solide des couleurs SC, dans l'espace de couleur CMJ. Ainsi, l'intersection de deux tétraèdres donnés TD1 est soit vide, soit un sommet P, soit une arête entière de tétraèdre, soit une face entière de tétraèdre, et pour tout point dans le solide des couleurs SC, il existe un tétraèdre TD1 le contenant.

A une étape E4, en référence à la figure 5, le microprocesseur 21 transforme les premiers tétraèdres TD1 définis dans l'espace de couleur CMJ respectivement en des premiers tétraèdres transformés TD1a définis dans l'espace de couleur CIE L*a*b*. La transformation ci-dessus consiste à transférer pour chaque premier tétraèdre TD1 les sommets P du tétraèdre dans l'espace CIE L*a*b*, c'est-à-dire à positionner lesdits sommets P en leurs coordonnées dans cet espace. Les sommets P ainsi transférés dans l'espace CIE L*a*b* seront désignés dans la suite par Pa. Chaque premier tétraèdre transformé TD1a a alors pour sommets les quatre points Pa correspondant aux quatre sommets P du tétraèdre respectif TD1, et a quatre faces triangulaires planes délimitées par les segments reliant deux à deux lesdits quatre points Pa. L'ensemble des premiers tétraèdres transformés TD1a constitue une partition d'un solide SCa, qui est sensiblement le solide des couleurs de l'imprimante dans l'espace CIE L*a*b*. Le solide des couleurs SCa est déformé par rapport à sa forme cubique, représentée à la figure 3, dans l'espace CMJ. Les faces planes F1 à F6 du cube SC de la figure 3 deviennent des faces distordues F1a à F6a dans l'espace CIE L*a*b*, en raison de la non-linéarité de la transformation entre l'espace CMJ et l'espace CIE L*a*b*. Chaque face Fia, où i est un entier compris entre 1 et 6, du solide des couleurs SCa est composée de sous-faces planes triangulaires SFi qui sont des faces de tétraèdres TD1a.

La triangulation des points d'échantillonnage P dans l'espace de couleur CMJ à l'étape E3, puis la transformation des tétraèdres TD1 à l'étape E4, fournissent sensiblement une subdivision du solide des couleurs SCa en polyèdres convexes TD1a dans l'espace CIE L*a*b*. Une triangulation directe des points d'échantillonnage Pa dans l'espace CIE L*a*b* serait très difficile à réaliser en raison de la répartition très irrégulière des points d'échantillonnage Pa et de la forme parfois concave des faces du solide des couleurs SCa dans cet espace.

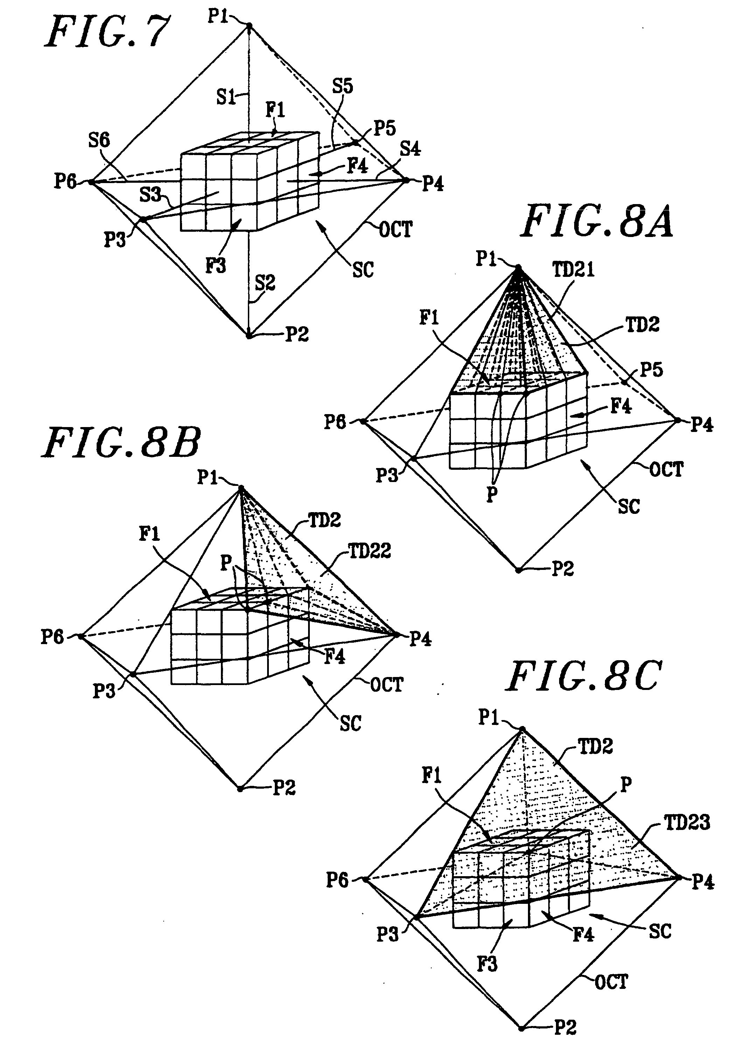

Toutefois, pour remédier à certains cas assez rares où des tétraèdres TD1a se recouvrent dans l'espace CIE L*a*b*, notamment lorsqu'un tétraèdre s'est "retourné" lors de sa transformation, une procédure de vérification est de préférence mise en oeuvre à une étape E5. A titre d'illustration, les figures 6A et 6B montrent deux premiers tétraèdres TD1' et TD1" dans l'espace CMJ, et les deux premiers tétraèdres transformés correspondants TD1a' et TD1a" dans l'espace CIE L*a*b*. Dans l'espace CMJ, les deux tétraèdres TD1' et TD1" sont adjacents et présentent, comme montré à la figure 6A, une face FC en commun, et des sommets respectifs P' et P" opposés à la face FC qui sont situés de part et d'autre de la face FC. Dans l'espace CIE L*a*b*, comme montré à la figure 6B, le tétraèdre transformé TD1a' s'est retourné. Les sommets Pa' et Pa " des tétraèdres TD1a' et TD1a" correspondant aux sommets P' et P" respectivement sont situés du même côté par rapport à la face FCa transformée de la face FC dans l'espace CIE L*a*b*.

La vérification à l'étape E5 consiste à contrôler le non-retournement d'un tétraèdre par exemple en calculant pour chaque couple de tétraèdres TD1 et TD1a les déterminants suivants : 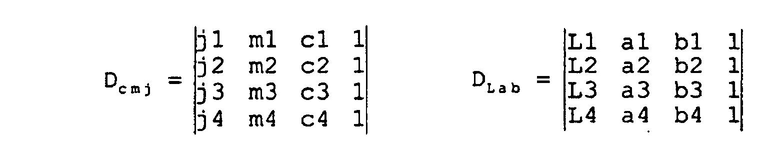 où (ck,mk, jk) , k étant un entier compris entre 1 et 4, sont les coordonnées des quatres sommets P du tétraèdre TD1 dans l'espace CMJ, et (Lk,ak,bk) sont les coordonnées des quatre sommets Pa du tétraèdre TD1a dans l'espace CIE L*a*b*.

Si les déterminants D_{cmj} et D_{Lab} ont des signes opposés, cela signifie que le tétraèdre TD1 s'est transformé en un tétraèdre TD1a retourné. Le sommet responsable du retournement, c'est-à-dire le sommet Pa' dans l'exemple de la figure 6B, est alors supprimé à une étape E6, et les étapes E3 et E4 sont recommencées ou remises à jour pour trianguler de nouveau les points d'échantillonnage P restants et transformer les tétraèdres TD1 résultant de cette seconde triangulation.

En pratique, l'espace CIE L*a*b* est défini dans un domaine DF borné et délimité par des valeurs propres à l'application considérée. Par exemple, la recommandation UIT-T T42 en télécopie couleur précise que la clarté L* s'étend de 0 à 100, et les composantes chromatiques a* et b* respectivement de - 85 à 85 et de -75 à 125. Ce domaine de définition DF de l'espace CIE L*a*b* a été choisi de sorte que les solides des couleurs des imprimantes actuelles y soit tous inclus.

Dans l'image IM reçue par l'imprimante 22 de la figure 1, certaines couleurs peuvent correspondre à des points dans l'espace de couleur CIE L*a*b* n'appartenant pas au solide des couleurs de l'imprimante. Ceci survient notamment lorsque le document original tel qu'analysé par le numériseur du télécopieur 1 produisant l'image IM comprend des couleurs qui n'appartiennent pas au solide des couleurs SCa de l'imprimante 22, ou lorsque la transmission de l'image IM à travers le réseau de télécommunications RT est perturbée, les couleurs reçues étant alors altérées par rapport aux couleurs initialement produites.

Conformément à l'invention, afin de traiter n'importe quel point du domaine de définition DF de l'espace CIE L*a*b*, et en particulier les points de l'image reçue IM situés hors du solide des couleurs SCa, l'algorithme de caractérisation de la figure 2 comprend en outre des étapes E23, E34, et E7 à E9 pour produire une structure à trois dimensions externe au solide des couleurs SCa.

A l'étape E23, intercalée entre l'étape d'analyse de mire E2 et l'étape de triangulation E3 déjà décrites, six premiers points additionnels P1 à P6 sont construits dans l'espace de couleur CMJ. Comme montré à la figure 7, les premiers points additionnels P1 à P6 sont à l'extérieur du solide des couleurs SC et respectivement en regard des six faces F1 à F6 du solide des couleurs SC. De préférence chaque point Pi, où i est un entier compris entre 1 et 6, est situé sur l'axe de symétrie Si perpendiculaire à la face Fi correspondante, et à une distance environ égale à deux fois la longueur des arêtes du cube SC. Les six points P1 à P6 définissent un octaèdre OCT, contenant le solide des couleurs SC.

A l'étape E34, intercalée entre l'étape de triangulation E3 et l'étape de transformation E4, la triangulation de Delaunay effectuée à l'étape E3 est complétée par l'adjonction d'un ensemble de seconds tétraèdres adjacents TD2 extérieurs au solide des couleurs SC.

En référence aux figures 8A, 8B et 8C, les seconds tétraèdres TD2 sont répartis de la manière suivante :
- 6 sous-ensembles de tétraèdres TD21 associés respectivement aux six faces F1 à F6 du cube SC, le sous-ensemble associé à la face F1 étant seulement représenté à la figure 8A pour des raisons de clarté; chaque tétraèdre TD21 a pour sommets trois points d'échantillonnage P situés sur la face associée du cube SC et l'un des points additionnels P1 à P6 en visibilité directe de ladite face associée ;
- 12 sous-ensembles de tétraèdres TD22 associés respectivement aux 12 arêtes du cube SC, le sous-ensemble associé à l'arête commune aux faces F1 et F4 étant seulement représenté à la figure 8B ; chaque tétraèdre TD22 a pour sommets deux points d'échantillonnage P situés sur l'arête associée du cube SC et deux des points additionnels P1 à P6 en visibilité directe respectivement des deux faces ayant en commun ladite arête associée ;
- 8 tétraèdres TD23 associés respectivement aux 8 sommets du cube SC, le tétraèdre associé au sommet commun aux faces F1, F3 et F4 étant seulement représenté à la figure 8C ; chaque tétraèdre TD23 a pour sommet un point d'échantillonnage P constituant le sommet associé du cube SC et trois des points additionnels P1 à P6 en visibilité directe respectivement des trois faces ayant en commun ledit sommet associé.

L'ensemble des premiers et seconds tétraèdres TD1 et TD2 constitue une partition du volume défini par l'octaèdre OCT, chaque tétraèdre n'étant intersecté par ses tétraèdres voisins que par un sommet de tétraèdre, une arête entière de tétraèdre ou une face entière de tétraèdre, et tout point dans l'octaèdre OCT étant inclus dans un tétraèdre TD1 ou TD2.

Aux étapes E7 à E9 de l'algorithme de la figure 2, les seconds tétraèdres TD2 sont transformés en des seconds tétraèdres transformés TD2a dans l'espace de couleur CIE L*a*b* de la manière décrite ci-dessous.

A l'étape E7, succédant à l'étape de vérification E5, des seconds points additionnels P1a à P6a sont construits dans l'espace de couleur CIE L*a*b*. Dans cet espace de couleur, comme déjà indiqué, le solide des couleurs SCa est déformé par rapport à sa forme cubique SC dans l'espace de couleur CMJ. En particulier, les faces F1a à F6a du solide SCa sont distordues dans l'espace CIE L*a*b*. Chaque second point additionnel Pia, où i est un entier compris entre 1 et 6, est associé dans l'espace CIE L*a*b* à la face Fia et positionné de façon à être inclus dans le "noyau" de la face Fia. Le "noyau" de la face Fia est défini comme l'ensemble des points dans l'espace de couleur à trois dimensions depuis lesquels toute la surface extérieure de la face Fia est en visibilité directe.

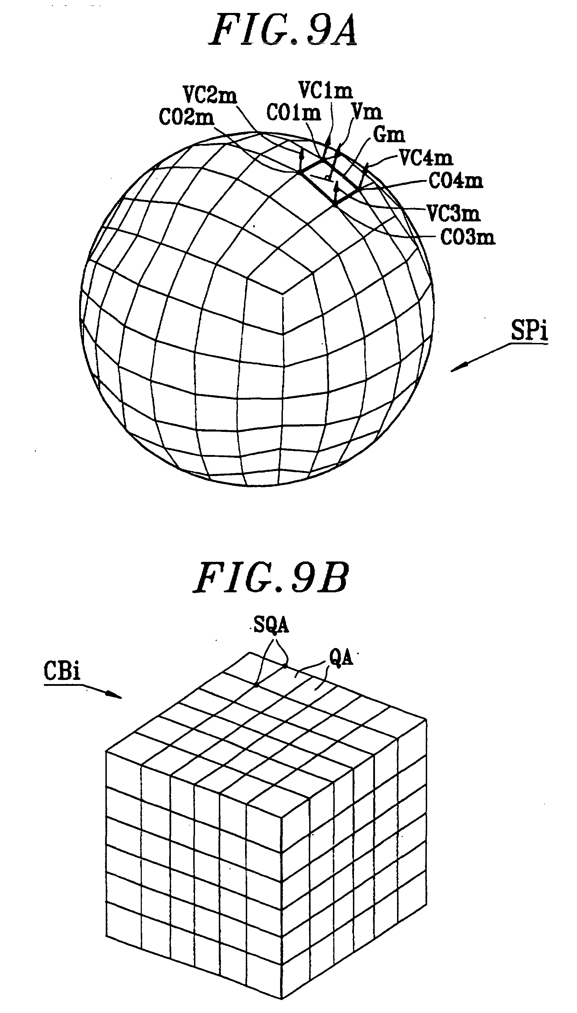

Pour déterminer la position du point additionnel Pia associé à la face Fia, une sphère de rayon unité dite de "Gauss" SPi est définie dans l'espace CIE L*a*b*. La sphère de Gauss SPi est représentée à la figure 9A. La surface de cette sphère est subdivisée en M calottes sphériques G1 à GM de formes et de tailles sensiblement identiques. Cette subdivision est obtenue en projetant radialement sur la sphère SPi la surface d'un cube CBi, montré à la figure 9B, qui est centré sur la sphère et dont les faces sont respectivement parallèles aux axes L*, a* et b* de l'espace CIE L*a*b*. La surface du cube CBi est subdivisée en quadrilatères adjacents QA, qui sont transformés par la projection radiale respectivement en les calottes sphériques G1 à GM. Les quadrilatères QA, et en particulier leurs sommets SQA, sont définis de sorte que tous les angles des dièdres formés par les plans passant par le centre du cube CBi et deux côtés parallèles d'un quadrilatère QA aient une même valeur.

Pour chaque calotte sphérique Gm, où m est un entier compris entre 1 et M, est calculé un vecteur normal unitaire Vm, égal à la somme normalisée des vecteurs unitaires VC1m à VC4m normaux à la sphère SPi respectivement en quatre coins CO1m à CO4m de la calotte sphérique Gm. Les vecteurs V1 à VM constituent un échantillonnage de l'ensemble des vecteurs unitaires de l'espace de couleur.

Pour chaque vecteur normal unitaire de calotte sphérique Vm sont déterminés respectivement les produits scalaires entre le vecteur Vm et des vecteurs unitaires NSFi normaux aux sous-faces triangulaires SFi composant la face Fia (Cf. figure 5). Les vecteurs Vm (m=1 à M) pour lesquels le produit scalaire avec chacun des vecteurs NSFi associés à la face Fia est supérieur ou égal à un seuil prédéterminé sensiblement supérieur à zéro sont additionnés en un vecteur VECTi. Le seuil prédéterminé est choisi égal au sinus de l'angle maximum parmi les angles définis entre chaque vecteur normal unitaire Vm et les quatre vecteurs normaux unitaires VC1m à VC4m associés à la calotte sphérique Gm. Le vecteur VECTi correspond à une direction suivant laquelle il existe au moins un point appartenant au noyau de la face Fia.

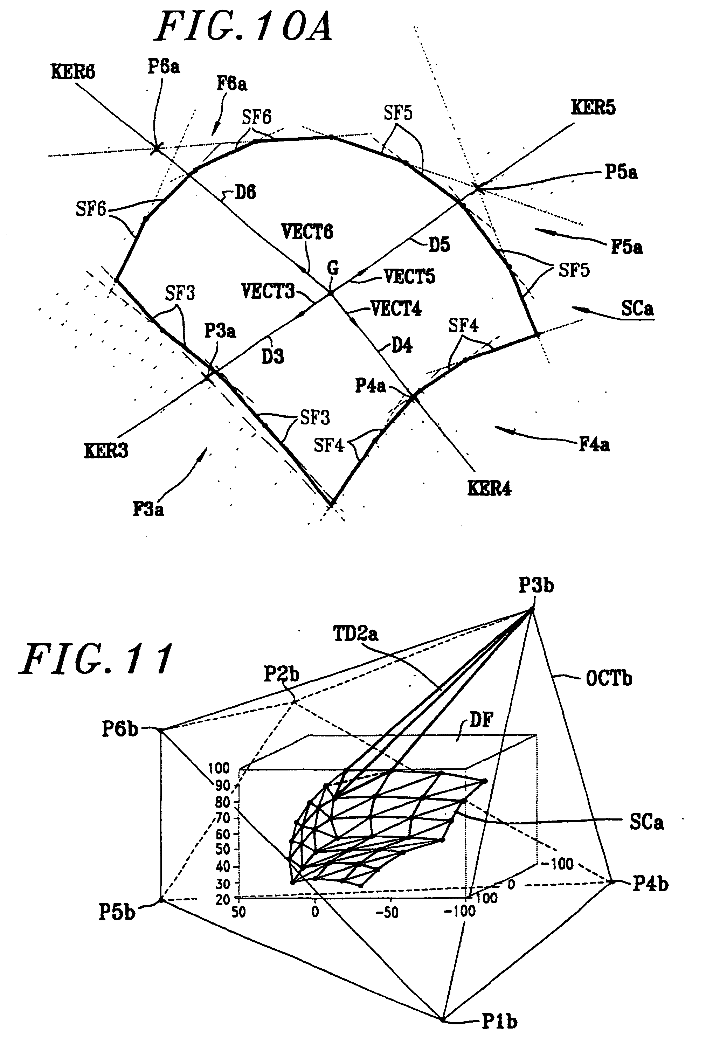

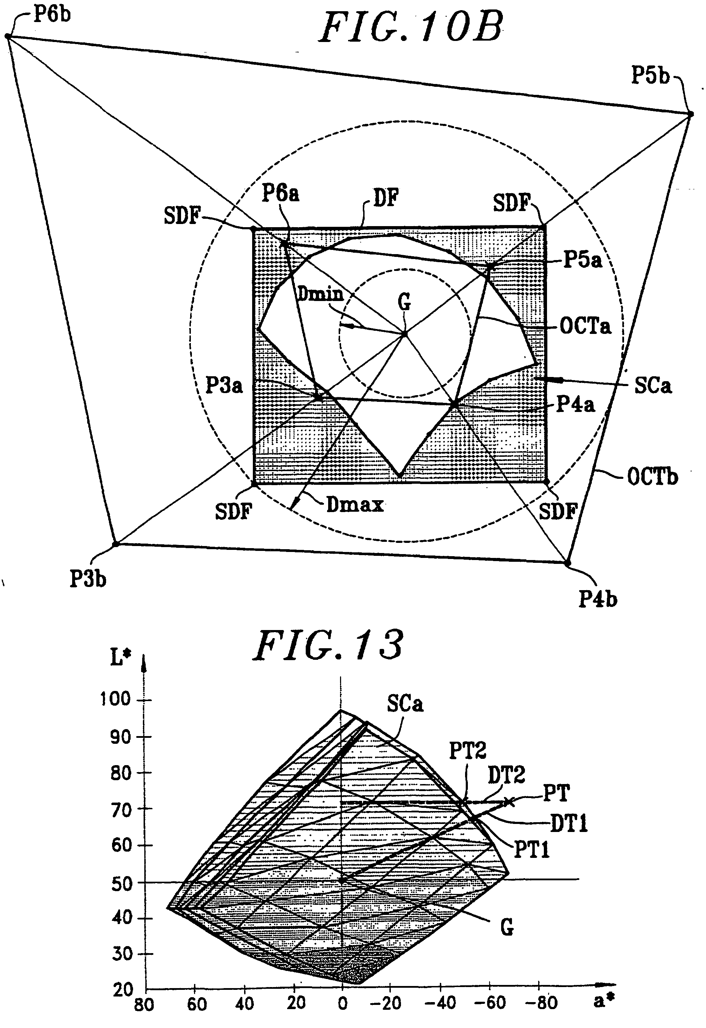

En référence à la figure 10A, qui est un diagramme schématique à deux dimensions représentant quatre faces distordues F3a à F6a du solide des couleurs SCa dans l'espace de couleur CIE L*a*b*, le point additionnel Pia associé à la face Fia est localisé sur une droite Di passant par un point G de clarté L*=50 et de composantes a* et b* nulles, et de vecteur directeur VECTi. Dans la figure 10A, les noyaux KER3 à KER6 des faces F3a à F6a sont représentés par des zones hachurées. De préférence, dans le noyau KERi, le point additionnel Pia est le point de la droite Di qui appartient à l'intersection des demi-espaces extérieurs définis par les sous-faces Sfi et qui est le plus proche du point G. Les six points additionnels P1a à P6a obtenus définissent un octaèdre OCTa montré schématiquement en deux dimensions à la figure 10B. On garantit par cette construction que tous les points situés sur la demi-droite d'origine Pia et de vecteur directeur VECTi appartiennent au noyau de la face Fia.

A l'étape E8, une homothétie de centre G est appliquée aux six points P1a à P6a afin que l'octaèdre OCTa soit transformé en un octaèdre OCTb qui contienne complètement le solide des couleurs SCa et le domaine de définition DF de l'espace CIE L*a*b*. Le facteur de l'homothétie est choisi supérieur à 1 et au moins égal au rapport entre la distance maximale Dmax séparant le point G des sommets SDF du domaine de définition DF et la distance minimale Dmin séparant le point G des faces de l'octaèdre OCTa. Les points transformés des points additionnels P1a à P6a par l'homothétie ci-dessus, désignés par P1b à P6b, constituent les sommets de l'octaèdre transformé OCTb.

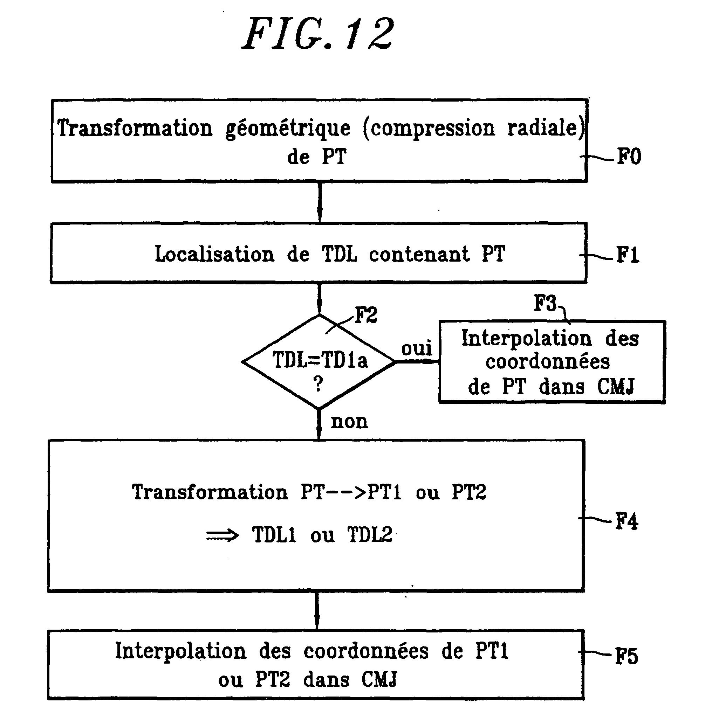

A l'étape E9 de l'algorithme de caractérisation de la figure 2, les seconds tétraèdres transformés TD2a sont obtenus en transformant les tétraèdres TD2 de la même manière qu'à l'étape E4 pour les tétraèdres TD1, puis en remplaçant dans l'espace CIE L*a*b* les sommets correspondant aux sommets P1 à P6 de l'espace CMJ respectivement par les points additionnels transformés P1b à P6b. La figure 11 illustre un tétraèdre transformé TD2a ainsi que l'octaèdre OCTb défini par les points transformés P1b à P6b et englobant le solide des couleurs SCa et le domaine de définition DF de l'espace de couleur CIE L*a*b*. L'octaèdre OCTb est subdivisé en les premiers tétraèdres transformés TD1a à l'intérieur du solide des couleurs SCa, et en les seconds tétraèdres transformés TD2a à l'extérieur du solide des couleurs SCa.

La construction ci-dessus des seconds tétraèdres transformés TD2a dans l'espace de couleur CIE L*a*b* garantit l'absence de recouvrement entre les tétraèdres TD2a grâce au positionnement de chaque sommet P1b à P6b dans le noyau de la face correspondante du solide des couleurs SCa et garantit également que l'enveloppe convexe des tétraèdres TD2a englobe le solide des couleurs. Dans le cas où une autre construction des points P1b à P6b dans l'espace CIE L*a*b* serait faite sans vérifier les deux conditions ci-dessus, la transformation des tétraèdres TD2 ne serait pas satisfaisante, puisque, dans de nombreux cas où les faces du solide des couleurs SCa sont concaves dans ce dernier espace, des tétraèdres TD2a ainsi transformés pourraient se recouvrir entre eux ou chevaucher des tétraèdres TD1a, et l'ensemble des tétraèdres transformés TD1a, TD2a ne constituerait alors pas une partition d'un volume incluant le solide des couleurs SCa dans l'espace CIE L*a*b*.

La figure 12 montre un algorithme de transformation de couleurs conforme à l'invention, mis en oeuvre par le microprocesseur 21 du télécopieur 2 de la figure 1 pour chaque pixel de l'image IM reçue par le circuit récepteur 20.

Soit un point donné PT de coordonnées connues dans l'espace de couleur CIE L*a*b* et correspondant à la couleur dudit pixel de l'image IM. A une première étape F1 de l'algorithme de transformation, une localisation du tétraèdre contenant le point PT est effectuée de manière classique par une technique de cheminement de proche en proche (en anglais : walking algorithm), en utilisant des informations associées à chaque tétraèdre, relatives à l'identification du tétraèdre et à l'identification des tétraèdres adjacents audit tétraèdre.

Selon cette technique, un tétraèdre TD1a ou TD2a initial est sélectionné. Le tétraèdre initial est de préférence le tétraèdre contenant initialement le point associé à la couleur du pixel de l'image IM précédemment traité par le microprocesseur 21. Pour chaque face du tétraèdre initial on détermine ensuite la position du point donné PT par rapport au plan défini par la face. Si, pour au moins l'une des faces du tétraèdre initial, le point PT est situé dans le demi-espace défini par le plan de la face qui ne contient pas le sommet du tétraèdre opposé à la face, alors le tétraèdre initial est remplacé par le tétraèdre adjacent partageant ladite face avec le tétraèdre initial. Le processus est ensuite réitéré jusqu'à ce que le point donné PT appartienne, pour chacune des faces du tétraèdre, à celui des deux demi-espaces définis par le plan de la face qui contient le sommet opposé à la face, c'est-à-dire jusqu'à ce que le point donné PT appartienne au tétraèdre.

A une étape F2, on détermine si le tétraèdre localisé, désigné par TDL, contenant le point donné PT, appartient à l'ensemble de premiers tétraèdres transformés TD1a ou à l'ensemble de seconds tétraèdres transformés TD2a, grâce aux informations d'identification ci-dessus.

Si le tétraèdre localisé TDL est l'un des premiers tétraèdres transformés TD1a inclus dans le solide des couleurs SCa, alors une interpolation des coordonnées du point PT dans l'espace de couleur CMJ est réalisée à une étape F3, afin de déterminer les proportions de couleurs cyan, magenta et jaune à produire par l'imprimante 22 pour imprimer sensiblement la couleur définie par le point PT. L'interpolation mise en oeuvre à l'étape F3 est par exemple une interpolation linéaire à coefficients barycentriques. Des coefficients barycentriques de somme égale à 1 sont affectés aux quatre sommets du tétraèdre TDL. Les coefficients barycentriques sont proportionnels respectivement aux volumes des quatre sous-tétraèdres contenus dans le tétraèdre TDL et ayant pour sommets trois des quatre sommets du tétraèdre TDL et le point donné PT. Les coordonnées interpolées du point PT dans l'espace de couleur CMJ sont alors celles du barycentre des quatre points P de l'espace CMJ correspondant respectivement aux quatre sommets Pa du tétraèdre TDL affectés des coefficients précités.

Si, à l'étape F2, le tétraèdre localisé TDL appartient à l'ensemble de seconds tétraèdres transformés TD2a, c'est-à-dire si le point PT est situé à l'extérieur du solide des couleurs SCa, alors une étape F4 de transformation de couleur est mise en oeuvre, au cours de laquelle le point donné PT est transformé en un point situé à l'intérieur ou à la surface du solide des couleurs SCa. La technique de transformation utilisée est une technique dite "d'écrêtage" (en anglais : gamut clipping), qui est par exemple selon une première variante une technique de projection radiale, ou selon une seconde variante une technique de projection à clarté et teinte constantes, les clarté et teinte étant telles que définies dans l'espace CIE L*a*b*.

La figure 13 illustre les techniques d'écrêtage ci-dessus. Selon la première variante à projection radiale, le point PT est transformé en un point PT1, qui est le point sur le solide SCa le plus proche du point PT sur une droite radiale DT1 définie par le point G de clarté L*=50 et de composantes chromatiques a* et b* nulles et le point PT. Selon la seconde variante à projection à clarté et teinte constantes, le point PT est transformé en un point PT2, qui est le point sur le solide SCa ayant la même clarté et la même teinte que le point PT le plus proche de ce dernier, c'est-à-dire le point du solide SCa le plus proche du point PT sur une droite DT2 perpendiculaire à l'axe de clarté L* et intersectant ce dernier.

La transformation du point donné PT en le point transformé PT1 (PT2) est effectuée par un cheminement de proche en proche, comme expliqué ci-dessous. Le tétraèdre TDL contenant le point donné PT est sélectionné comme tétraèdre initial. Puis on sélectionne un tétraèdre, parmi les tétraèdres adjacents au tétraèdre TDL, qui est traversé par la demi-droite d'origine le point PT, colinéaire avec la droite DT1 (DT2) et traversant le solide des couleurs SCa. Cette opération est réitérée de manière à sélectionner des tétraèdres adjacents successivement traversés par la demi-droite précitée jusqu'à ce que le tétraèdre sélectionné soit l'un des premiers tétraèdres transformés TD1a. Ce premier tétraèdre transformé, désigné par TDL1 (TDL2) contient le point transformé PT1 (PT2). Plus particulièrement, le point transformé PT1 (PT2) est le point d'intersection entre la première face du tétraèdre TDL1 (TDL2) traversée par la demi-droite précitée et cette dernière. Ladite première face traversée du tétraèdre TDL1 (TDL2) est l'une des sous-faces planes triangulaires SF1 à SF6.

A une étape F5, les coordonnées du point transformé PT1 (PT2) dans l'espace de couleur CMJ sont interpolées en fonction des coordonnées dans cet espace des quatre sommets du tétraèdre TDL1 (TDL2), comme décrit précédemment en référence à l'étape F3.

Selon une variante de l'invention, pour chaque point PT correspondant à une couleur de l'image IM reçue par le second télécopieur 2, une étape préliminaire F0 de transformation géométrique dans l'espace CIE L*a*b* est en outre mise en oeuvre préalablement à l'étape de localisation F1 dans l'algorithme de la figure 12. Cette transformation géométrique est par exemple une compression de couleur radiale (en anglais : radial gamut compression), qui consiste à appliquer au point PT une homothétie de centre G, et de rapport constant, par exemple 15 %. Toutes les couleurs de l'image IM sont modifiées par cette transformation, y compris les couleurs incluses dans le solide des couleurs. La transformation géométrique ci-dessus peut être effectuée par un cheminement de proche en proche comparable à celui de l'étape F4.

Selon cette variante, à l'étape F2 de l'algorithme de la figure 12, le nombre de points PT (après transformation géométrique à l'étape F0) situés hors du solide des couleurs SCa de l'imprimante 22 et pour lesquels les étapes F4 et F5 sont appliquées est réduit de manière significative.

Selon une autre variante de l'invention, les points PT auxquels l'algorithme de la figure 12 est appliqué sont non pas des points correspondant à des couleurs de l'image IM, mais des points d'échantillonnage de l'espace de couleur CIE L*a*b* produits par le microprocesseur 21 et répartis régulièrement dans tout le domaine de définition DF. Les coordonnées desdits points d'échantillonnage dans l'espace CIE L*a*b*, ainsi que leurs coordonnées dans l'espace CMJ obtenues après les étapes d'interpolation F3 et F5, sont écrites dans une table dite de "transcodage" dans une mémoire du microprocesseur 21. La table de transcodage caractérise l'imprimante 22. Elle peut être intégrée dans un fichier caractérisant l'imprimante (en anglais : device profile) adapté à un système de gestion de couleur (en anglais : color management system).

Pour chaque pixel d'image reçu par le circuit récepteur 20, par exemple un pixel de l'image IM, le point de l'espace CIE L*a*b* définissant la couleur du pixel est situé géométriquement dans un cube minimal défini par huit points contigus de la table de transcodage. Les coordonnées dudit point dans l'espace CMJ propre à l'imprimante sont interpolées de manière classique en fonction des coordonnées dans cet espace des huit points contigus. Même lorsque ledit point est situé en dehors du solide des couleurs SCa dans l'espace CIE L*a*b*, l'interpolation de ses coordonnées dans l'espace CMJ fournit directement et de manière contrôlée un point situé à l'intérieur ou sur la surface du solide des couleurs et correspondant donc à une couleur restituable par l'imprimante.

La description ci-dessus a été produite pour une imprimante de télécopieur couleur à titre d'exemple seulement. Le procédé conforme à l'invention peut s'appliquer de la même manière à toute autre imprimante couleur, et à tout autre dispositif de restitution de couleurs tel qu'un dispositif de visualisation (écran plat, vidéoprojecteur, etc.).

Egalement, l'invention n'est pas limitée à la transformation d'une couleur définie dans l'espace CIE L*a*b* en une couleur définie dans l'espace CMJ, mais peut concerner d'autres espaces de couleur.

En outre, l'invention peut s'appliquer à un dispositif de restitution de couleurs utilisant un nombre de couleurs primaires supérieur à 3 lorsqu'un procédé est utilisé pour déterminer les proportions des couleurs primaires à partir des seules coordonnées dans le second espace de couleur. Par exemple l'invention peut s'appliquer à une imprimante quadrichrome pour laquelle les proportions des quatre encres Cyan, Magenta, Jaune et Noir à imprimer peuvent être déterminées à partir des seules coordonnées dans l'espace CMJ au moyen d'un procédé du type "retrait des sous-couleurs" (en anglais : Undercolor Removal).

## Revendications

1. Procédé de transformation d'une couleur prédéterminée correspondant à un point donné (PT) dans un premier espace de couleur (CIE L*a*b*), en une couleur restituable par un dispositif de restitution de couleurs (22) et définie dans un second espace de couleur (CMJ),
comprenant les étapes :
- détermination (E1-E3) d'un ensemble de premiers polyèdres convexes (TD1) constituant sensiblement une partition d'un solide des couleurs (SC) du dispositif de restitution de couleurs dans le second espace de couleur (CMJ), et
- transformation (E4) de l'ensemble de premiers polyèdres convexes (TD1) en un ensemble de premiers polyèdres convexes transformés (TD1a) définis dans le premier espace de couleur (CIE L*a*b*), de sorte que l'ensemble des premiers polyèdres convexes transformés (TD1a) constitue sensiblement une partition du solide des couleurs (SCa) du dispositif de restitution de couleurs dans le premier espace de couleurs (CIE L*a*b*),
**caractérisé en ce qu'**il comprend en outre les étapes suivantes :
- détermination (E23,E34,E7,E8,E9) dans le premier espace de couleur (CIE L*a*b*), d'un ensemble de seconds polyèdres convexes (TD2a) externes au solide des couleurs (SCa), de sorte que les premiers polyèdres convexes transformés (TD1a) et les seconds polyèdres convexes (TD2a) constituent une partition d'un volume (OCTb) incluant le solide des couleurs (SCa) et ledit point donné (PT),
- localisation (F1) du polyèdre convexe (TDL) contenant ledit point donné (PT) dans le premier espace de couleur (CIE L*a*b*), et
- si le polyèdre convexe localisé (TDL) contenant ledit point donné (PT) appartient à l'ensemble de seconds polyèdres (TD2a) externes au solide des couleurs (SCa), transformation (F4) dans le premier espace de couleur (CIE L*a*b*) dudit point donné (PT) en un point transformé (PT1;PT2) appartenant au solide des couleurs (SCa), et interpolation (F6) des coordonnées du point transformé dans le second espace de couleur (CMJ) en fonction au moins des coordonnées dans cet espace des sommets d'un polyèdre convexe (TDLa;TDLb) appartenant à l'ensemble des premiers polyèdres convexes transformés et contenant le point transformé (PT1;PT2).

2. Procédé conforme à la revendication 1, comprenant en outre l'interpolation (F3) des coordonnées dudit point donné (PT) dans le second espace de couleur (CMJ) en fonction au moins des coordonnées dans cet espace des sommets dudit polyèdre localisé (TDL) contenant ledit point donné, si le polyèdre localisé contenant ledit point donné appartient à l'ensemble de premiers polyèdres transformés (TD1a).

3. Procédé conforme à la revendication 1 ou 2 selon lequel ladite détermination d'un ensemble de premiers polyèdres convexes (TD1) comprend les étapes suivantes :
- restitution (E1) par le dispositif de restitution de couleurs (22) d'une mire de couleur (MC) comprenant un ensemble d'échantillons de couleur (CA) représentatif du solide des couleurs (SC), les échantillons de couleurs (CA) correspondant respectivement à des points prédéterminés (P) dans le second espace de couleur (CMJ),
- analyse (E2) de la mire de couleur (MC) restituée afin de déterminer les coordonnées de chaque point prédéterminé (P) dans le premier espace de couleur (CIE L*a*b*), et
- triangulation (E3) desdits points prédéterminés (P) dans le second espace de couleur (CMJ).

4. Procédé conforme à l'une quelconque des revendications 1 à 3, selon lequel l'étape de transformation de l'ensemble de premiers polyèdres convexes (TD1) dans le premier espace de couleur (CIE L*a*b*) consiste à transformer chaque premier polyèdre convexe (TD1) en un premier polyèdre convexe transformé correspondant (TD1a) en transférant les sommets (P) dudit chaque premier polyèdre convexe (TD1) dans le premier espace de couleur (CIE L*a*b*).

5. Procédé conforme à l'une quelconque des revendications 1 à 4, selon lequel le solide des couleurs est délimité par des faces (F1a à F6a) non nécessairement planes dans le premier espace de couleur (CIE L*a*b*), ledit volume est le volume d'un polyèdre convexe (OCTb) défini par des sommets prédéterminés (P1b à P6b), pour chacune desdites faces il existe au moins un sommet parmi lesdits sommets prédéterminés qui soit en visibilité directe de toute la surface extérieure de la face, et chaque sommet des seconds polyèdres convexes (TD2a) est confondu avec l'un desdits sommets prédéterminés (P1b à P6b) ou avec l'un des sommets des premiers polyèdres convexes transformés (TD1a).

6. Procédé conforme à la revendication 5, selon lequel le solide des couleurs (SC) est sensiblement un cube dans le second espace de couleur (CMJ), et ledit polyèdre convexe (OCTb) défini par les sommets prédéterminés est un octaèdre.

7. Procédé conforme à l'une quelconque des revendications 1 à 4, selon lequel le solide des couleurs (SC;SCa) est délimité par des faces non nécessairement planes (F1 à F6 ; F1a à F6a), et ladite détermination d'un ensemble de seconds polyèdres convexes (TD2a) comprend les étapes :
- détermination (E23), dans le second espace de couleur (CMJ), de premiers points additionnels (P1 à P6) externes au solide des couleurs (SC) et définissant un polyèdre convexe (OCT) qui inclut le solide des couleurs (SC), chaque premier point additionnel étant en visibilité directe de toute la surface extérieure de l'une respective des faces (F1 à F6) du solide des couleurs (SC) dans cet espace,
- détermination (E34), dans le second espace de couleur (CMJ), d'un ensemble de polyèdres convexes (TD2) externes au solide des couleurs (SC), de sorte que les premiers polyèdres convexes (TD1) et lesdits polyèdres convexes (TD2) externes au solide des couleurs constituent sensiblement une partition dudit polyèdre convexe (OCT) défini par les premiers points additionnels (P1 à P6), et de sorte que chaque sommet desdits polyèdres convexes (TD2) externes au solide des couleurs soit confondu avec l'un des premiers points additionnels (P1 à P6) ou avec l'un des sommets des premiers tétraèdres (TD1),
- détermination (E7,E8), dans le premier espace de couleur (CIE L*a*b*), de seconds points additionnels (P1b à P6b), chaque second point additionnel étant en visibilité directe de toute la surface extérieure de l'une respective des faces (F1a à F6a) du solide des couleurs (SCa) dans cet espace, et
- transformation (E9) desdits polyèdres convexes (TD2) externes au solide des couleurs en les seconds polyèdres convexes (TD2a) par transfert dans le premier espace de couleur (CIE L*a*b*) de chaque sommet desdits polyèdres convexes (TD2) externes au solide des couleurs qui est confondu avec l'un des sommets des premiers tétraèdres (TD1), et par remplacement de chaque sommet desdits polyèdres convexes (TD2) externes au solide des couleurs qui est confondu avec l'un des premiers points additionnels (P1 à P6) par l'un correspondant des seconds points additionnels (P1b à P6b).

8. Procédé conforme à l'une quelconque des revendications 1 à 7, selon lequel les premiers polyèdres convexes transformés (TD1a) et les seconds polyèdres convexes (TD2a) sont des tétraèdres.

9. Procédé conforme à l'une quelconque des revendications 1 à 8, selon lequel le premier espace de couleur (CIE L*a*b*) a un domaine de définition borné (DF) incluant le solide des couleurs (SCa) du dispositif de restitution de couleurs (22), et ledit volume (OCTb) incluant le solide des couleurs inclut ledit domaine de définition (DF).

10. Procédé conforme à l'une quelconque des revendications 1 à 9, selon lequel le dispositif de restitution de couleurs est une imprimante couleur (22) comprise dans un télécopieur (2), et ladite couleur prédéterminée est transmise au télécopieur (2) à travers un réseau de télécommunications (RT).

11. Procédé conforme à la revendication 2 ou à l'une quelconque des revendications 3 à 8 lorsqu'elle dépend de la revendication 2, et conforme à la revendication 9, selon lequel le domaine de définition (DF) du premier espace de couleur (CIE L*a*b*) est échantillonné en des points d'échantillonnage donnés, et selon lequel l'étape de localisation du polyèdre convexe (F1), l'étape de transformation (F4), l'étape d'interpolation des coordonnées du point transformé (F5), et l'étape d'interpolation des coordonnées dudit point donné (F3) sont mises en oeuvre pour chaque point d'échantillonnage de manière à établir une table de transcodage contenant des coordonnées associées aux points d'échantillonnage dans le second espace de couleur (CMJ) .

## Patentansprüche

1. Verfahren zur Transformation einer vorbestimmten Farbe entsprechend einem gegebenen Punkt (PT) in einem ersten Farbenraum (CIE L*a*b*) in eine Farbe, die durch eine Farbwiederherstellvorrichtung (22) wiederherstellbar ist und in einem zweiten Farbenraum (CMJ) definiert ist,
umfassend die Schritte:
- Bestimmung (E1 - E3) eines Satzes von ersten konvexen Polyedern (TD1), die im wesentlichen einen Bereich eines Körpers der Farben (SC) der Farbwiederherstellvorrichtung im zweiten Farbenraum (CMJ) bilden, und
- Transformation (E4) des Satzes von ersten konvexen Polyedern (TD1) in einen Satz von ersten transformierten konvexen Polyedern (TD1a), die im ersten Farbenraum (CIE L*a*b*) definiert sind, derart, daß der Satz der ersten transformierten konvexen Polyeder (TD1a) im wesentlichen einen Bereich des Körpers der Farben (SCa) der Farbwiederherstellvorrichtung im ersten Farbenraum (CIE L*a*b*) bildet,
**dadurch gekennzeichnet, daß** es außerdem die folgenden Schritte umfaßt:
- Bestimmung (E23, E34, E7, E8, E9) im ersten Farbenraum (CIE L*a*b*) eines Satzes von zweiten konvexen Polyedern (TD2a) außen zum Körper der Farben (SCa), derart, daß die ersten transformierten konvexen Polyeder (TD1a) und die zweiten konvexen Polyeder (TD2a) einen Bereich eines Volumens (OCTb) bilden, der den Körper der Farben (SCa) und den gegebenen Punkt (PT) einschließt,
- Lokalisierung (F1) des konvexen Polyeders (TDL), der den gegebenen Punkt (PT) im ersten Farbenraum (CIE L*a*b*) enthält, und
- wenn der lokalisierte konvexe Polyeder (TDL), der den gegebenen Punkt (PT) enthält, zu dem Satz von zweiten Polyedern (TD2a) außen zum Körper der Farben (SCa) gehört, Transformation (F4) in den ersten Farbenraum (CIE L*a*b*) des gegebenen Punktes (PT) in einen transformierten Punkt (PT1; PT2), der zu dem Körper der Farben (SCa) gehört, und Interpolation (F6) der Koordinaten des transformierten Punktes im zweiten Farbenraum (CMJ) abhängig von wenigstens den Koordinaten in diesem Raum der Spitzen eines konvexen Polyeders (TDLa; TDLb), das zu dem Satz der ersten transformierten konvexen Polyeder gehört und den transformierten Punkt (PT1; PT2) enthält.

2. Verfahren nach Anspruch 1, umfassend außerdem die Interpolation (F3) der Koordinaten des gegebenen Punktes (PT) im zweiten Farbenraum (CMJ) abhängig von wenigstens den Koordinaten in diesem Raum der Spitzen des lokalisierten Polyeders (TDL), das den gegebenen Punkt enthält, wenn das lokalisierte Polyeder, das den gegebenen Punkt enthält, zu dem Satz von ersten transformierten Polyeder (TD1a) gehört.

3. Verfahren nach Anspruch 1 oder 2, gemäß dem die Bestimmung eines Satzes von ersten konvexen Polyedern (TD1) die folgenden Schritte umfaßt:
- Wiederherstellung (E1) durch die Farbwiederherstellvorrichtung (22) eines Farbtestbildes (MC), umfassend einen Satz von Farbmustern (CA), der für den Körper der Farben (SC) repräsentativ ist, wobei die Farbmuster (CA) jeweils vorbestimmten Punkten (P) im zweiten Farbenraum (CMJ) entsprechen,
- Analyse (E2) des wiederhergestellten Farbtestbildes (MC), um die Koordinaten jedes vorbestimmten Punktes (P) im ersten Farbenraum (CIE L*a*b*) zu bestimmen, und
- Triangulation (E3) der vorbestimmten Punkte (P) im zweiten Farbenraum (CMJ).

4. Verfahren nach einem beliebigen der Ansprüche 1 bis 3, gemäß dem der Schritt der Transformation des Satzes von ersten konvexen Polyedern (TD1) in den ersten Farbenraum (CIE L*a*b*) darin besteht, jedes erste konvexe Polyeder (TD1) in ein erstes transformiertes konvexes Polyeder (TD1a) zu transformieren, wobei die Spitzen (P) des besagten jeden ersten konvexen Polyeders (TD1) in den ersten Farbenraum (CIE L*a*b*) übertragen werden.

5. Verfahren nach einem beliebigen der Ansprüche 1 bis 4, gemäß dem der Körper der Farben durch nicht notwendigerweise ebene Seiten (F1a bis F6a) im ersten Farbenraum (CIE L*a*b*) begrenzt ist, wobei das Volumen das Volumen eines konvexen Polyeders (OCTb) ist, das durch vorbestimmte Spitzen (P1b bis P6b) definiert ist, für jede der Seiten wenigstens eine Spitze unter den vorbestimmten Spitzen vorhanden ist, die von der gesamten Außenfläche der Seite direkt sichtbar ist, und jede Spitze der zweiten konvexen Polyeder (TD2a) mit der einen der vorbestimmten Spitzen (P1b bis P6b) oder mit der einen der Spitzen der ersten transformierten konvexen Polyeder (TD1a) verschmolzen ist.

6. Verfahren nach Anspruch 5, gemäß dem der Körper der Farben (SC) im wesentlichen ein Würfel im zweiten Farbenraum (CMJ) ist und das durch die vorbestimmten Spitzen definierte konvexe Polyeder (OCTb) ein Oktaeder ist.

7. Verfahren nach einem beliebigen der Ansprüche 1 bis 4, gemäß dem der Körper der Farben (SC; SCa) durch nicht notwendigerweise ebene Seiten (F1 bis F6; F1a bis F6a) begrenzt ist und die Bestimmung eines Satzes von zweiten konvexen Polyedern (TD2a) die Schritte umfaßt:
- Bestimmung (E23) im zweiten Farbenraum (CMJ) von ersten zusätzlichen Punkten (P1 bis P6), die zum Körper der Farben (SC) außen sind und ein konvexes Polyeder (OCT) definieren, das den Körper der Farben (SC) einschließt, wobei jeder zusätzliche Punkt direkt sichtbar von der gesamten Außenfläche der einen entsprechenden der Seiten (F1 bis F6) des Körpers der Farben (SC) in diesem Raum ist,
- Bestimmung (E34) im zweiten Farbenraum (CMJ) eines Satzes von konvexen Polyedern (TD2), außen zum Körper der Farben (SC), derart, daß die ersten konvexen Polyeder (TD1) und die konvexen Polyeder (T2) außen zum Körper der Farben im wesentlichen einen Bereich des konvexen Polyeders (OCT) bilden, das durch die ersten zusätzlichen Punkte (P1 bis P6) definiert ist, und derart, daß jede Spitze der konvexen Polyeder (TD2) außen zum Körper der Farben mit dem einen der ersten zusätzlichen Punkte (P1 bis P6) oder mit der einen der Spitzen der ersten Tetraeder (TD1) verschmolzen ist,
- Bestimmung (E7, E8) im ersten Farbenraum (CIE L*a*b*) von zweiten zusätzlichen Punkten (P1b bis P6b), wobei jeder zusätzliche Punkt von der gesamten Außenfläche der einen entsprechenden der Seiten (F1a bis F6a) des Körpers der Farben (SCa) in diesem Raum direkt sichtbar ist, und
- Transformation (E9) der konvexen Polyeder (TD2) außen zum Körper der Farben in zweite konvexe Polyeder (TD2a) durch Übertragung in den ersten Farbenraum (CIE L*a*b*) jeder Spitze der konvexen Polyeder (TD2) außen zum Körper der Farben, die mit der einen der Spitzen der ersten Tetraeder (TD1) verschmolzen ist, und durch Ersetzen jeder Spitze der konvexen Polyeder (TD2) außen zum Körper der Farben, die mit dem einen der ersten zusätzlichen Punkte (P1 bis P6) verschmolzen ist durch den einen entsprechenden der zweiten zusätzlichen Punkte (P1b bis P6b).

8. Verfahren nach einem beliebigen der Ansprüche 1 bis 7, gemäß dem die ersten transformierten konvexen Polyeder (TD1a) und die zweiten konvexen Polyeder (TD2a) Tetraeder sind.

9. Verfahren nach einem beliebigen der Ansprüche 1 bis 8, gemäß dem der erste Farbenraum (CIE L*a*b*) eine Domäne mit beschränkter Definition (DF) aufweist, die den Körper der Farben (SCa) der Farbwiederherstellvorrichtung (22) einschließt, und wobei das Volumen (OCTb), das den Körper der Farben einschließt, die Definitionsdomäne (DF) einschließt.

10. Verfahren nach einem beliebigen der Ansprüche 1 bis 9, gemäß dem die Farbwiederherstellvorrichtung ein Farbdrucker (22) ist, der in einem Telekopierer (2) enthalten ist, und die vorbestimmte Farbe über ein Telekommunikationsnetz (RT) zum Telekopierer (2) übertragen wird.

11. Verfahren nach Anspruch 2 oder einem beliebigen der Ansprüche 3 bis 8, wenn dieser vom Anspruch 2 abhängig ist, und gemäß Anspruch 9, gemäß dem die Definitiondomäne (DF) des ersten Farbenraums (CIE L*a*b*) in gegebenen Abtastpunkten abgetastet wird und gemäß dem der Schritt der Lokalisierung des konvexen Polyeders (F1), der Transformationsschritt (F4), der Schritt der Interpolation der Koordinaten des transformierten Punktes (F5) und der Schritt der Interpolation der Koordinaten des gegebenen Punktes (F3) für jeden Abtastpunkt ausgeführt werden, derart, daß eine den Abtastpunkten im zweiten Farbenraum (CMJ) zugeordnete Koordinaten enthaltende Umcodierungstabelle erstellt wird.

## Claims

1. Method of converting a predetermined colour corresponding to a given point (PT) in a first colour space (CIE L*a*b*) into a colour which can be restored by a colour restoration device (22) and defined in a second colour space (CMY),
comprising the steps of:
- determining (E1-E3) a set of first convex polyhedrons (TD1) substantially constituting a division of a solid of the colours (SC) of the colour restoration device in the second colour space (CMY), and
- converting (E4) the set of first convex polyhedrons (TD1) into a set of converted convex first polyhedrons (TD1a) defined in the first colour space (CIE L*a*b*), so that all the converted first convex polyhedrons (TD1a) substantially constitute a division of the solid of the colours (SCa) of the colour restoring device in the first colour space (CIE L*a*b*),
**characterised in that** it further comprises the following steps:
- determining (E23, E34, E7, E8, E9) in the first colour space (CIE L*a*b*) a set of second convex polyhedrons (TD2a) outside the solid of the colours (SCa) so that the first converted convex polyhedrons (TD1a) and the second convex polyhedrons (TD2a) constitute a division of a volume (OCTb) including the solid of the colours (SCa) and said given point (PT),
- locating (F1) the convex polyhedron (TDL) containing said given point (PT) in the first colour space (CIE L*a*b*), and
- if the located convex polyhedron (TDL) containing said given point (PT) belongs to the set of second polyhedrons (TD2a) outside the solid of the colours (SCa), transforming (F4) in the first colour space (CIE L*a*b*) said given point (PT) into a converted point (PT1; PT2) belonging to the solid of the colours (SCa), and interpolating (F6) the co-ordinates of the point converted in the second colour space (CMY) as a function of at least the co-ordinates in this space of the vertices of a convex polyhedron (TDLa;TDLb) belonging to the set of first converted convex polyhedrons and containing the converted point (PT1; PT2).

2. Process according to claim 1, further comprising the interpolation (F3) of the co-ordinates of said given point (PT) in the second colour space (CMY) as a function of at least the co-ordinates in this space of the vertices of said located polyhedron (TDL) containing said given point, if the located polyhedron containing said given point belongs to the set of first converted polyhedrons (TD1a).

3. Process according to claim 1 or 2, according to which said determination of a set of first convex polyhedrons (TD1) comprises the following steps:
- restoring (E1), by means of the colour restoring device (22), a colour chart (MC) comprising a set of colour samples (CA) representing the solid of the colours (SC), the samples of colours (CA) corresponding respectively to predetermined points (P) in the second colour space (CMY),
- analysing (E2) the restored colour chart (MC) in order to determine the co-ordinates of each predetermined point (P) in the first colour space (CIE L*a*b*), and
- triangulating (E3) said predetermined points (P) in the second colour space (CMY).

4. Process according to any one of claims 1 to 3, wherein the step of converting the set of first convex polyhedrons (TD1) in the first colour space (CIE L*a*b*) consists in converting each first convex polyhedron (TD1) into a corresponding first converted convex polyhedron (TD1a), transferring the vertices (P) of each first convex polyhedron (TD1) into the first colour space (CIE L*a*b*).

5. Process according to any one of claims 1 to 4, wherein the solid of the colours is delimited by sides (F1a to F6a) which are not necessarily flat in the first colour space (CIE L*a*b*), said volume is the volume of a convex polyhedron (OCTb) defined by predetermined vertices (P1b to P6b), for each of said sides there is at least one vertex among said predetermined vertices which is directly visible from the entire outer surface of the side, and each vertex of the second convex polyhedrons (TD2a) coincides with one of said predetermined vertices (P1b to P6b) or with one of the vertices of the first converted convex polyhedrons (TD1a).

6. Process according to claim 5, wherein the solid of the colours (SC) is essentially a cube in the second colour space (CMY) and said convex polyhedron (OCTb) defined by the predetermined vertices is an octahedron.

7. Process according to any one of claims 1 to 4, wherein the solid of the colours (SC; SCa) is delimited by sides which are not necessarily flat (F1 to F6; F1a to F6a) and said determination of a set of second convex polyhedrons (TD2a) comprises the steps of:
- determining (E23), in the second colour space (CMY), first additional points (P1 to P6) outside the solid of the colours (SC) and defining a convex polyhedron (OCT) which includes the solids of the colours (SC), each first additional point being directly visible from the entire outer surface of the respective one of the sides (F1 to F6) of the solid of the colours (SC) in this space,
- determining (E34), in the second colour space (CMY), a set of convex polyhedrons (TD2) outside the solid of the colours (SC), so that the first convex polyhedrons (TD1) and said convex polyhedrons (TD2) outside the solid of the colours constitute substantially a division of said convex polyhedron (OCT) defined by the first additional points (P1 to P6), and so that each vertex of said convex polyhedrons (TD2) outside the solid of the colours coincides with one of the additional points (P1 to P6) or with one of the vertices of the first tetrahedrons (TD1),
- determining (E7, E8), in the first colour space (CIE L*a*b*), second additional points (P1b to P6b), each second additional point being directly visible from the entire outer surface of a respective one of the sides (F1a to F6a) of the solid of the colours (SCa) in this space, and
- converting (E9) said convex polyhedrons (TD2) outside the solid of the colours into the second convex polyhedrons (TD2a) by transferring into the first colour space (CIE L*a*b*) of each vertex of said convex polyhedrons (TD2) outside the solid of the colours which coincides with one of the vertices of the first tetrahedrons (TD1), and by replacing each vertex of said convex polyhedrons (TD2) outside the solid of the colours which coincides with one of the first additional points (P1 to P6) by a corresponding one of the second additional points (P1b to P6b).

8. Process according to any one of claims 1 to 7, wherein the first converted convex polyhedrons (TD1a) and the second convex polyhedrons (TD2a) are tetrahedrons.

9. Process according to any one of claims 1 to 8, wherein the first colour space (CIE L*a*b*) has a limited definition range (DF) including the solid of the colours (SCa) of the colour restoring device (22), and said volume (OCTb) including the solid of the colours includes said defining domain (DF).

10. Process according to any one of claims 1 to 9, wherein the colour restoration device is a colour printer (22) contained in a facsimile machine (2) and said predetermined colour is transmitted to the facsimile machine (2) through a telecommunications network (RT) .

11. Process according to claim 2 or any one of claims 3 to 8 when dependent on claim 2, and according to claim 9, wherein the definition domain (DF) of the first colour space (CIE L*a*b*) is sampled at given sampling points, and wherein the step of locating the convex polyhedron (F1), the step of conversion (F4), the step of interpolating the co-ordinates of the converted point (F5) and the step of interpolating the co-ordinates of said given point (F3) are implemented for each sampling point, so as to draw up a coding table containing the co-ordinates associated with the sampling points in the second colour space (CMY).
